# EUROPÄISCHE PATENTANMELDUNG

(11) **EP 3 421 974 A1**
(43) Veröffentlichungstag der Anmeldung: **02.01.2019**
(21) Anmeldenummer: 17178655.1
(22) Anmeldetag: 29.06.2017
(51) Int. Cl.: G01N 21/47, G01N 15/06, G01N 21/27

(54) **VORRICHTUNG UND VERFAHREN ZUR DETEKTION VON PARTIKELN**

(71) Anmelder: Siemens Aktiengesellschaft, 80333 München (DE)
(72) Erfinder: Willsch, Michael, 07745 Jena (DE); Richter, Markus, 99085 Erfurt (DE)

(57) **Zusammenfassung**

Die Erfindung betrifft eine Vorrichtung (10) sowie ein Verfahren zur Detektion von Partikeln (20), mit wenigstens einer Lichtquelle (12), und mit wenigstens einem Detektor (14) zum Erfassen von Licht, wobei wenigstens ein Medium (16) von von der Lichtquelle (12) bereitgestelltem Licht durchleuchtbar ist, welches eine Ablagerungsoberfläche (18) für die Partikel (20) aufweist, wobei der Detektor (14) dazu ausgebildet ist, von den auf der Ablagerungsoberfläche (18) abgelagerten Partikeln (20) reflektiertes und das Medium (16) durchdringendes Licht zu erfassen.

## Beschreibung

Die Erfindung betrifft eine Vorrichtung zur Detektion von Partikeln gemäß dem Oberbegriff von Patentanspruch 1, sowie ein Verfahren zur Detektion von Partikeln gemäß dem Oberbegriff von Patentanspruch 12.

In, insbesondere großen elektrischen, Maschinen, Generatoren, Motoren und/oder Antrieben, kann es, insbesondere durch kontinuierliche elektromagnetische Felder hervorgerufene, mechanische Schwingungen zu Ermüdungserscheinungen an der elektrischen Isolation beispielsweise der Wicklung kommen. Durch zusätzliche mechanische Reibung an den Bandagen zwischen den Wicklungsstäben im Wickelkopfbereich kann die Isolation derart geschädigt werden, dass es zum elektrischen Durchschlag kommen kann. Die Schäden an der Isolation gehen mit einer Freisetzung von Teilen, insbesondere Reibstaub, beziehungsweise Partikeln des Isolationsmaterials einher.

Um Beschädigungen beziehungsweise weitergehende Beschädigungen an der Isolation zu vermeiden, gibt es verschiedene Verfahren zur Erkennung. Beispielsweise zeigt die EP 2 385 357 A1 einen faseroptischen Vibrationssensor für Generatoren in Kraftwerken. Dabei werden über Vibrationsmessungen an den elektrischen Leitern eines Wickelkopfs des Generators Schwingungen gemessen, welche als ein Maß für Beschädigungen an der Isolierung herangezogen werden.

Des Weiteren ist Stand der Technik, dass mittels optoelektronischer Sensoren, die ähnlich wie ein Rauchmelder die Menge von Staubteilchen in der Luft detektieren können, Rückschlüsse auf Partikel des Isolationsmaterials möglich sind. In einer rauen Umgebung großer elektrischer Maschinen mit Temperaturen bis beispielsweise 100 °C sowie starken elektrischen und magnetischen Feldern kommen elektronische Sensoren jedoch an ihre Grenzen. In explosionsgefährdeten Bereichen, wie beispielsweise wasserstoffgekühlten Maschinen, ist der Einsatz elektronischer Schaltungen ebenfalls kritisch.

Durch eine Schadensfrüherkennung ist es möglich, Schäden, wie sie beispielsweise durch elektrischen Durchschlag an den schadhaften Isolationsstellen verursacht werden können, zu vermeiden und somit unplanmäßigen und teuren Maschinenstillstände vorzubeugen. Um einen durchgehenden Betrieb einer, insbesondere elektrischen, Maschine sicherzustellen, ist ein rechtzeitiges Erkennen von Schäden der Isolierung wünschenswert.

Aufgabe der vorliegenden Erfindung ist es daher, eine Vorrichtung und ein Verfahren bereitzustellen, mittels welchen in besonders vorteilhafter Weise etwaige Beschädigungen eines Isolationsmaterials in einer, insbesondere elektrischen, Maschine festgestellt werden können.

Diese Aufgabe wird durch eine Vorrichtung mit den Merkmalen des Patentanspruchs 1 sowie durch ein Verfahren mit den Merkmalen des Patentanspruchs 12 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Vorrichtung zur Detektion von Partikeln. Die Vorrichtung weist wenigstens eine Lichtquelle und wenigstens einen Detektor zum Erfassen von Licht auf.

Um nun besonders vorteilhaft Partikel detektieren zu können, insbesondere Partikel von einer Isolierung einer, insbesondere elektrischen, Maschine, weist die Vorrichtung wenigstens ein von von der Lichtquelle bereitgestelltem Licht durchleuchtbares Medium auf, welches beispielsweise als transparente Scheibe ausgebildet ist oder eine solche aufweist. Außerdem weist das Medium eine Ablagerungsoberfläche für die Partikel auf. Dabei ist der Detektor dazu ausgebildet, von den auf der Ablagerungsoberfläche abgelagerten Partikeln reflektiertes und das Medium durchdringendes Licht zu erfassen. Das Grundprinzip ist, dass der sich auf dem, insbesondere transparenten, Medium, als Partikel, niederschlagende Reibstaub der Maschine detektiert werden soll. Dazu wird ein Lichtstrahl der Lichtquelle auf das Medium gelenkt. Das durch die Streuung an den Partikeln, insbesondere Reibstaubpartikeln, durch das Medium zurückgestreute Licht wird im Anschluss mit dem Detektor erfasst. Die Intensität des zurückgestreuten Lichts kann als Maß für die Anzahl der niedergeschlagenen Partikel dienen.

Mit anderen Worten ist der Detektor dazu ausgebildet, aus einer durch die auf der Ablagerungsoberfläche abgelagerten Partikel bewirkten Reflexion zumindest eines Teils des von der Lichtquelle bereitgestellten Lichts resultierendes, reflektiertes und das Medium durchdringendes Licht zu erfassen.

Beispielsweise während eines Betriebs der Vorrichtung setzen oder lagern sich Partikel auf der Ablagerungsoberfläche ab. Diese Partikel auf der Ablagerungsoberfläche führen zu einer Streuung beziehungsweise Reflexion des einfallenden Lichtes, welches von der Lichtquelle bereitgestellt wird und das Medium durchdringt. Insbesondere streuen oder reflektieren die auf der Ablagerungsoberfläche abgelagerten Partikel das Licht in verschiedene Raumrichtungen. Durch Streuung an den Partikeln wird zumindest ein Teil des das Medium durchdringenden Lichtes zurück in das Medium gelenkt, was kurz gesagt, einer Reflexion entspricht. Im Folgenden wird daher das durch den Detektor erfassbare, von den Partikeln gestreute, Licht als reflektiertes Licht bezeichnet.

Das von den Partikeln reflektierte Licht kann von dem Detektor erfasst werden, wodurch Rückschlüsse auf auf der Ablagerungsoberfläche abgelagerten Partikel möglich sind.

Durch die erfindungsgemäße Vorrichtung ist es möglich, insbesondere kleine, Partikel, welche sich auf der Ablagerungsoberfläche ablagern, zu detektieren. Dabei streuen beziehungsweise reflektieren die auf der Ablagerungsoberfläche abgelagerten Partikel das durch das Medium transmittierte Licht der Lichtquelle. Dabei kann die Reflexion beispielsweise je nach Partikelgröße und/oder Partikelform in unterschiedliche Raumrichtungen erfolgen, womit beispielsweise mittels einer jeweiligen Detektorposition unterschiedliche Partikel beziehungsweise Partikelarten detektierbar sind.

Durch Detektion der beispielsweise aus Isolationsmaterial gebildeten Partikel auf der Ablagerungsoberfläche ist eine Schadensfrüherkennung möglich, wodurch Schäden, welche durch schadhafte Isolationsstellen verursacht werden können, vermeidbar und somit unplanmäßige und teure Maschinenstillstände vorbeugbar sind. Die Vorrichtung ist vorzugsweise so in der Maschine angeordnet, dass nur ihre elektronisch passiven Bauteile, wie beispielsweise das Medium, in einem beispielsweise explosionsgefährdeten Teil der Maschine angeordnet sind und die Vorrichtung nur Licht in diesen und aus diesen Teil der Maschine transportiert.

In vorteilhafter Ausgestaltung der Erfindung weist die Vorrichtung wenigstens ein Abzweigelement auf, mittels welchem ein Teil des von der Lichtquelle bereitgestellten Lichts unter Umgehung des Mediums zu dem Detektor führbar ist. Mit anderen Worten wird zumindest ein Teil des Lichts der Lichtquelle vor Erreichen des Mediums derart abgelenkt, dass es den Detektor unter Umgehung des Mediums trifft. Hierdurch ergibt sich der Vorteil, dass der Teil des Lichts, welcher das Medium umgeht, als Referenzsignal beziehungsweise Referenzlicht dienen kann, um beispielsweise eine Zuverlässigkeit der Detektion der Partikel zu garantieren. Dazu sollte das Referenzlicht von dem durch die Partikel reflektierten Licht diskriminiert werden, dazu könnte die Lichtquelle so ausgebildet sein, dass sie beispielsweise Licht wenigstens zweier Lichtwellenlängen aussendet. Dadurch dass der ausgekoppelte Teil des Lichts und das reflektierte Licht beide den Detektor erreichen, können beispielsweise Unterbrechungen von Lichtwegen in der Vorrichtung festgestellt werden.

In vorteilhafter Ausgestaltung der Erfindung weist die Vorrichtung einen ersten Lichtleiter auf, mittels welchem das von der Lichtquelle bereitgestellte Licht zum Beleuchten des Mediums in dieses einkoppelbar ist beziehungsweise eingekoppelt wird. Darüber hinaus weist die Vorrichtung einen zweiten Lichtleiter auf, mittels welchem das reflektierte Licht aus dem Medium zu dem Detektor zu führen ist beziehungsweise geführt wird. Durch den ersten Lichtleiter, welcher das Licht der Lichtquelle zum Medium führt, kann die Lichtquelle flexibel an beziehungsweise in der Vorrichtung positioniert werden. Mit anderen Worten muss die Lichtquelle nicht direkt am Medium angeordnet sein, was eine große Flexibilität bei der Anordnung des Mediums und/oder dessen Größe verschafft. Im Falle des zweiten Lichtleiters ergeben sich die gleichen Vorteile analog zum ersten Lichtleiter, eine flexible Anordnung für den Detektor, das heißt der Detektor kann ebenfalls flexibel und nicht direkt am Medium angeordnet werden.

Ein weiterer Vorteil ist, dass ein Zuführen und Abführen des Lichts auf und von dem Medium über die, insbesondere als faseroptische Elemente ausgebildeten, Lichtleiter erfolgt, wodurch die Vorrichtung beispielsweise in explosionsgefährdeten Bereichen verwendet werden kann, insbesondere wenn die elektronischen Bauteile, wie beispielsweise die wenigstens eine Lichtquelle und der wenigstens eine Detektor sowie beispielsweise eine Auswerteeinheit außerhalb des gefährdeten Bereichs angeordnet werden können.

Eine weitere Ausführungsform der Erfindung zeichnet sich dadurch aus, dass das Abzweigelement durch einen Dritten Lichtleiter gebildet ist, mittels welchen zumindest der Teil des von der Lichtquelle bereitgestellten und den ersten Lichtleiter durchlaufenden Lichts abzweigbar und zu dem Detektor führbar ist. Mit anderen Worten ist zumindest eine teilweise Verbindung ausgebildet, welche Licht der Lichtquelle mittels des Lichtleiters auf den Detektor führt. Hierdurch ergibt sich der Vorteil, dass das Referenzlicht besonders verlustarm zu dem Detektor geführt werden kann, um dort beispielsweise ein gut messbares Signal des Detektors zu verursachen.

In vorteilhafter Ausgestaltung der Erfindung ist wenigstens ein Aufteilungselement vorgesehen, mittels welchem ein erster Teil des von der Lichtquelle bereitgestellten Lichts in den ersten Lichtleiter und ein zweiter Teil des von der Lichtquelle bereitgestellten Lichts in den dritten Lichtleiter ein koppelbar ist. Mit anderen Worten bildet das Aufteilungselement eine Kopplung aus, mittels welcher das Licht der Lichtquelle in den ersten und dritten Lichtleiter eingekoppelt werden kann. Dadurch können Verluste des Lichts bei einem Transport des Lichts der Lichtquelle durch die Vorrichtung vorteilhaft reduziert beziehungsweise die Intensität des Lichtes beibehalten werden.

In weiterer Ausgestaltung der Erfindung ist wenigstens ein Kopplungselement vorgesehen, mittels welchem Licht aus dem zweiten Lichtleiter und Licht aus dem dritten Lichtleiter zusammen führbar ist. Hierdurch ergeben sich vom Prinzip die gleichen Vorteile wie für das Aufteilungselement, wodurch, insbesondere Intensitätsverluste, des Lichts bei der Zuleitung zum Detektor vermieden werden können.

In vorteilhafter Ausgestaltung der Erfindung bildet der erste Lichtleiter einen ersten Strahlengang und der zweite Lichtleiter einen zweiten Strahlengang aus, welcher den ersten Strahlengang kreuzt. Mit anderen Worten sind die Lichtleiter derart angeordnet, dass aus dem ersten Lichtleiter austretendes Licht einen ersten Strahlengang und in den zweiten Lichtleiter einfallendes Licht einen zweiten Strahlengang aufweist, welcher den ersten Strahlengang kreuzt. Hierdurch ergibt sich beispielsweise der Vorteil, dass Licht nicht direkt aus dem ersten Lichtleiter in den zweiten Lichtleiter eintreten kann, ohne beispielsweise ein Reflexionsereignis durchgeführt zu haben, sodass eine übermäßige Beeinflussung des Detektors, beispielsweise durch Störsignale, vermieden werden kann.

In vorteilhafter Ausgestaltung der Erfindung weist der erste Lichtleiter wenigstens ein strahlformendes Element auf, über welches das Licht zum durchleuchten des Mediums in das Medium einkoppelbar ist.

Eine weitere Ausführungsform zeichnet sich dadurch aus, dass der zweite Lichtleiter wenigstens ein strahlformendes Element aufweist, über welches das reflektierte Licht aus dem Medium in den zweiten Lichtleiter einkoppelbar ist.

Das jeweilige strahlformende Element kann beispielsweise eine Linse und/oder ein Prisma und/oder ein Kollimator sein, sodass mittels des strahlformenden Elements beispielsweise eine Bündelung von Licht möglich ist. Teile des Lichtleiters, welche nicht die strahlformenden Elemente sind, können als strahlführende Elemente bezeichnet werden. Vorzugsweise befindet sich das jeweilige strahlformende Element an einem Endbereich des jeweiligen Lichtleiters. Bei dem ersten Lichtleiter ist dieser Endbereich vorteilhafterweise der Teil des Lichtleiters, welcher der Lichtquelle gegenüberliegt. Beim zweiten Lichtleiter ist der Endbereich vorzugweise der Teil der detektorabgewandten Seite.

Das heißt, mittels des jeweiligen Lichtleiters, insbesondere mittels dessen strahlformenden Elements, ist das Licht besonders vorteilhaft in das Medium einkoppelbar beziehungsweise aus dem Medium auskoppelbar. Der jeweilige Lichtleiter ist beispielsweise zumindest teilweise als optische Faser und somit zumindest teilweise als strahlführendes Element ausgebildet.

Durch die Streuung, insbesondere Reflexion, an den Partikeln auf der Ablagerungsoberfläche, wird ein Teil des Lichts zurück in das Medium, insbesondere die transparente Scheibe gelenkt, und danach beispielsweise von einem der jeweiligen strahlformenden Elemente, insbesondere einer Linse gesammelt, und entweder zurück in die den ersten Lichtleiter, beispielsweise eine optische Faser, und/oder insbesondere in den zweiten Lichtleiter, beispielsweise eine weitere optische Faser, eingekoppelt und zu dem Detektor geleitet.

Eine weitere Ausführungsform zeichnet sich dadurch aus, dass eine Strahlenfalle hinter dem Medium und der Ablagerungsoberfläche für zumindest einen Teil des durch das Medium transmittierten Lichts als Absorber dient. Die Strahlenfalle soll verhindern, dass Licht der Lichtquelle, welches durch das Medium transmittiert ist, hinter dem Medium, insbesondere der Ablagerungsoberfläche, reflektiert wird und in den zweiten Lichtleiter gelangen kann. Dies würde in dem Detektor ein Störsignal verursachen, welches als Fehlinterpretation eines Partikels auftreten könnte. Diese Gefahr kann durch die Strahlenfalle zumindest reduziert werden. Unter dem Merkmal, dass die Strahlenfalle hinter dem Medium angeordnet ist, ist insbesondere zu verstehen, dass die Strahlenfalle entlang der oben genannten Richtung, in die das Licht das Medium durchdringt, auf das Medium folgt, sodass zumindest ein Teil des Lichts nach Durchdringen des Mediums in die Strahlenfalle einfällt und von dieser beispielsweise absorbiert wird.

In weiterer vorteilhafter Ausgestaltung der Erfindung ist der Detektor dazu ausgebildet, wenigstens ein, insbesondere elektrisches, Signal bereitzustellen, welches das erfasste reflektierte Licht charakterisiert, das die auf der Ablagerungsoberfläche abgelagerten Partikel, welche das Licht zum Beleuchten des Mediums zurückreflektieren, charakterisiert. Mit anderen Worten ist der Detektor so ausgebildet, dass er reflektiertes Licht, welches in ihn einfällt, nicht nur detektieren, sondern auch unterscheiden kann. Dabei bedeutet "unterscheiden" beispielsweise, dass der Detektor je nach Art des einfallenden Lichtes ein jeweiliges charakteristisches elektrisches Signal bereitstellt, welches beispielsweise von einer als Auswerteeinheit ausgebildeten elektronischen Recheneinheit empfangen und weiterverarbeitet werden kann. Hierdurch ergibt sich der Vorteil, dass Rückschlüsse auf die Art des Partikels möglich sein können, wodurch eine Charakterisierung des Partikels erfolgen kann. Dies kann hilfreich bei einem Aufspüren eines möglichen Schadens der Maschine sein. Das Signal wir auch als Detektorsignal bezeichnet, wobei eine elektronische Verstärkerschaltung vorgesehen sein kann, mittels welcher das Signal verstärkt wird. Reicht beispielsweise eine Auflösung des Detektors nicht für eine bestimmte Charakterisierung aus, beispielsweise aufgrund der Art des verwendeten Detektors, kann eine Charakterisierung beispielsweise auch über die Position beziehungsweise die geometrischen Eigenschaften des zu dem Detektor führenden zweiten Strahlengangs erfolgen.

Ein zweiter Aspekt der Erfindung betrifft ein Verfahren zur Detektion von Partikeln, bei welchem die Partikel mittels wenigstens einer Lichtquelle, und mittels wenigstens eines Detektors zum Erfassen von Licht detektiert werden. Dazu wird bei dem Verfahren wenigstens ein eine Ablagerungsoberfläche für die Partikel aufweisendes Medium von dem von der Lichtquelle bereitgestellten Licht durchleuchtet und mittels des Detektors Licht, welches von den auf der Ablagerungsoberfläche abgelagerten Partikeln reflektiert wird und das Medium durchdringt, erfasst.

Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ausführungsbeispiele der Erfindung werden nachfolgend anhand schematischer Zeichnungen näher erläutert.

Dabei zeigt:
- FIG 1: einen schematischen Aufbau eines Ausführungsbeispiels einer erfindungsgemäßen Vorrichtung, einmal ohne und
- FIG 2: einmal mit auf einer Ablagerungsoberfläche abgelagerten Partikeln; einen schematischen Aufbau des Ausführungsbeispiels gemäß FIG 1 in einem Gehäuse;
- FIG 3: einen schematischen Aufbau eines zweiten Ausführungsbeispiels der Vorrichtung; und
- FIG 4: ein exemplarisches Messdiagramm einer Messung, welche mittels der Vorrichtung gemäß FIG 3 durchgeführt wurde.

In den Figuren sind funktionsgleiche Elemente jeweils mit dem gleichen Bezugszeichen versehen.

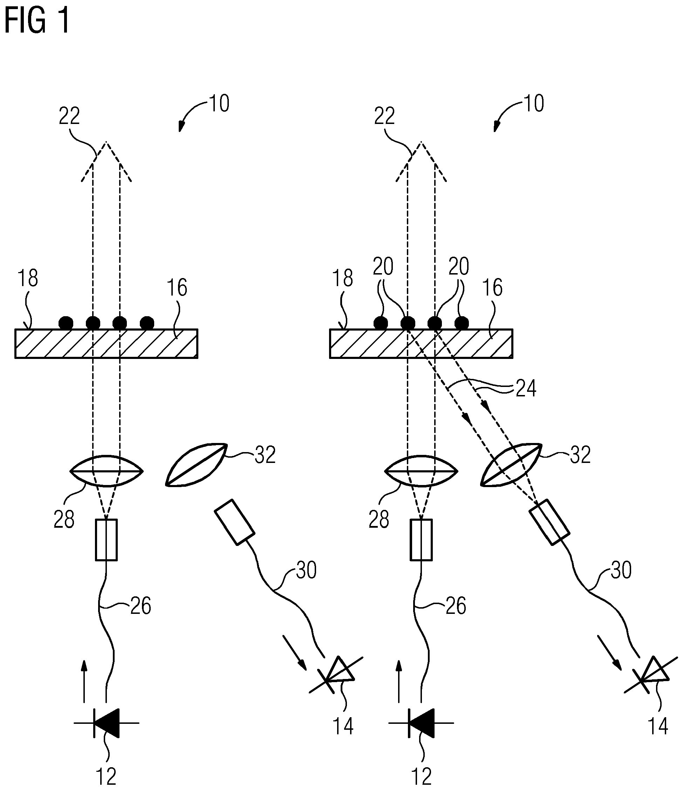

FIG 1 zeigt schematisch einen Aufbau eines Ausführungsbeispiels einer Vorrichtung 10, wobei die Vorrichtung 10 wenigstens eine Lichtquelle 12 und wenigstens einen Detektor 14 zum Erfassen von Licht aufweist. Die Vorrichtung 10 kann Teil einer, insbesondere elektrischen, Maschine sein und dient der Detektion von Partikeln. Durch die Detektion der Partikel, welche beispielsweise aus Isolationsmaterial von Isolierungen im Inneren der elektrischen Maschine gebildet sind, kann auf eventuelle Schäden der Maschine geschlossen werden.

Um eine Detektion der Partikel nun besonders vorteilhaft zu gestalten, wird von der Lichtquelle 12 Licht bereitgestellt, mittels welchem ein Medium 16 beleuchtet beziehungsweise durchleuchtet wird. Das Medium 16 weist eine Ablagerungsoberfläche 18 auf, auf welcher sich wenigstens ein Partikel 20 ablagern kann und welche auch als Staubdetektorfläche bezeichnet werden kann. Die Vorrichtung 10 ist in der linken Hälfte von FIG 1 ohne Partikel 20 auf der Ablagerungsoberfläche 18 gezeigt, hier kann das Licht der Lichtquelle 12 ungehindert durch das Medium 16 und dieses durch die Ablagerungsoberfläche 18 wieder verlassen, was durch einen Lichtstrahl 22 dargestellt ist.

In der rechten Hälfte der FIG 1 sind Partikel 20 auf der Ablagerungsoberfläche 18 der Vorrichtung 10 abgelagert. Das beziehungsweise die Partikel 20 können das Medium 16 durchdringendes und auf das jeweiligen Partikel 20 treffendes Licht der Lichtquelle 12 reflektieren, was durch Lichtstrahlen 24 angedeutet ist, und durch das Medium 16 schicken, wobei dieses reflektierte Licht von dem Detektor 14 erfassbar ist beziehungsweise erfasst wird.

Um das Licht der Lichtquelle 12 besonders vorteilhaft, und insbesondere gerichtet, auf beziehungsweise durch das Medium 16 zu leiten, ist an der Lichtquelle 12 ein erster Lichtleiter 26 angeordnet. Der Lichtleiter 26, welcher beispielsweise als eine optische Faser ausgebildet sein kann, weist an einem seiner Endbereiche wenigstens ein strahlformendes Element 28 auf, welches beispielsweise als Linse ausgebildet ist. Durch den ersten Lichtleiter 26, und insbesondere dessen strahlformendes Element 28, ist das von der Lichtquelle 12 bereitgestellte Licht zum Beleuchten des Mediums 16 in dieses einkoppelbar.

Man kann sagen, dass das Licht der Lichtquelle 12, welches insbesondere strahlformend durch das strahlformende Element 28 derart geformt wurde, den Lichtleiter 26 gerichtet verlässt, und dadurch einen ersten Strahlengang ausbildet, welcher durch den Lichtstrahl 22 dargestellt ist. Ein zweiter Lichtleiter 30, aufweisend ein strahlformendes Element 32, bildet einen zweiten Strahlengang, welcher durch die Lichtstrahlen 24 angedeutet ist. Mittels des zweiten Strahlengangs ist das durch den Partikel 20 reflektierte Licht, beispielsweise die Lichtstrahlen 24, dem Detektor 14 zuzuführen beziehungsweise zuführbar. Um reflektiertes Licht des Partikels 20 besonders vorteilhaft zu detektieren kreuzt der erste den zweiten Strahlengang. Genauer gesagt befindet sich jeweils ein Bündel aus Strahlengängen zwischen den Linien des den Lichtstrahl 22 darstellenden Pfeils beziehungsweise zwischen den Pfeilen, welche die Lichtstrahlen 24 darstellen, wobei der Einfachheit halber das jeweilige Bündel der jeweiligen Strahlengänge als ein erster beziehungsweise zweiter Strahlengang, welcher mittels des ersten Lichtleiters 26 beziehungsweise mittels des zweiten Lichtleiters 30 ausgebildet ist, bezeichnet wird.

Mit anderen Worten umfasst die Vorrichtung 10 eine Lichtquelle 12, welche eine breitbandige Lichtquelle oder wenigstens zwei Teilquellen 54 und 56 mit jeweils unterschiedlicher Wellenlänge aufweist, deren Licht über einen Lichtleiter 26, welcher ein strahlformendes Element 28, beispielsweise eine Linse, aufweist und beispielsweise zumindest teilweise als optisches Kabel ausgebildet ist, durch das Medium 16, geführt wird. Das Medium 16 weist dazu geeignete spektrale Reflexionsverläufe und spektrale Transmissionsverläufe auf und ist beispielsweise als eine transparente Scheibe ausgebildet. Mittels einer Transmission durch das Medium 16 trifft das Licht auf die Ablagerungsoberfläche 18, auf der sich die nachzuweisenden Partikel 20, insbesondere die Reibstaubpartikel, ablagern können. Allgemein führen die Partikel 20 auf der Ablagerungsoberfläche 18 zu einer Streuung des einfallenden Lichts in verschiedene Raumrichtungen. Durch Streuung an den Partikeln 20 wird ein Teil des Lichts zurück in das Medium 16 gelenkt beziehungsweise reflektiert und danach beispielsweise von dem strahlformenden Element 32 gesammelt und durch den Lichtleiter 30 zu dem Detektor 14 geführt.

Der Detektor 14 ist vorzugsweise so ausgebildet, dass er wenigstens ein, insbesondere elektrisches, Signal bereitstellt beziehungsweise bereitstellen kann, welches das erfasste reflektierte Licht und somit die auf der Ablagerungsoberfläche 18 abgelagerten Partikel 20, welche das Licht zum beleuchten des Mediums zurückreflektieren, charakterisiert. Dazu kann der Detektor 14 beispielsweise als Spektrometer und/oder durch mehrere diskrete Detektoren 64 und 66 mit geeigneten vorgeschalteten optischen Filterelementen ausgeführt sein, wobei die Detektoren beispielsweise als Photodioden und/oder PD-Arrays ausgeführt sind. Das Detektorsignal kann durch eine elektronische Verstärkerschaltung verstärkt und beispielsweise mittels eines AD-Wandlers (Analog-Digital-Wandler) als ein digitales Signal zu Weiterverarbeitung beispielsweise an eine Auswerteeinheit bereitgestellt werden.

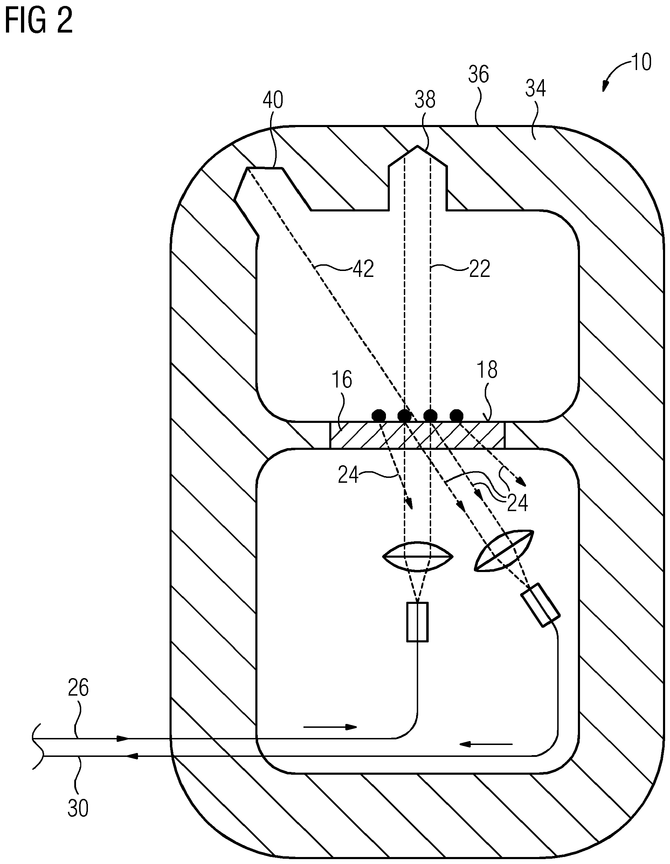

FIG 2 zeigt einen schematischen Aufbau der Vorrichtung 10 gemäß FIG 1, welche sich zumindest teilweise in einem Gehäuse 34 befindet, wobei insbesondere die Lichtquelle 12 und der Detektor 14 nicht in dem gezeigten Gehäuse 34 angeordnet sind, insbesondere da beide in der Regel mit elektrischer Energie betrieben werden. Man kann sagen, dass in dem Gehäuse 34 nur elektronisch passive Komponenten, wie beispielsweise die Lichtleiter 26 und 30 mit ihren strahlformenden Elementen 28 und 32, angeordnet sind. Das Gehäuse 34 bildet zusammen mit den in ihm angeordneten Komponenten einen sogenannten Sensor 36 beziehungsweise einen sogenannten Sensorkopf. Durch die elektronisch passive Auslegung des Sensors 36 kann dieser beispielsweise in explosionsgefährdeten Bereichen eingesetzt werden.

Licht des Lichtstrahls 22, welches das Medium 16 und die Ablagerungsoberfläche 18 passiert hat, ohne reflektiert zu werden, wird vorzugsweise wie im Ausführungsbeispiel gezeigt zumindest teilweise durch eine Strahlenfalle 38, welche als Sackbohrung ausgeführt ist, absorbiert. Durch die Strahlenfalle 38 wird eine Reflexion des Lichts beispielsweise an den Wänden des Gehäuses 34 vermieden, wodurch Störsignale, welche den Detektor 14 erreichen könnten, vermieden werden. Dazu ist die Strahlenfalle 38 entlang einer Strahlachse des Lichtstrahls 22 in dem ersten Strahlengang angeordnet. Ferner weist das Gehäuse 34 eine zweite Strahlenfalle 40 auf, welche ebenfalls als Sackbohrung ausgeführt. Die Strahlenfalle 40 befindet sich in einer Verlängerung des zweiten Strahlengangs, was durch die gestrichelte Linie 41 angedeutet ist. Durch die Anordnung der zweiten Strahlenfalle 40 ist eine Reflexion von, insbesondere am Gehäuse 34 gestreuten, Licht direkt in den zweiten Strahlengang welcher das Licht mittels des Lichtleiters 30 zum Detektor 14 führt ausgeschlossen. Um auszuschließen, dass Fremdlicht oder vom ersten Strahlengang beziehungsweise des Lichtstrahl 22 in einer Umgebung, Beispielsweise dem Gehäuse 34, zurück gestreutes Licht ungewollt auf den Detektor 14 trifft, können die optischen Strahlenfallen 38 und 40 als Teil des Sensors 36 ausgebildet sein. Ferner kann ein sogenanntes Labyrinth eine Unterdrückung des Störlichtes verbessern.

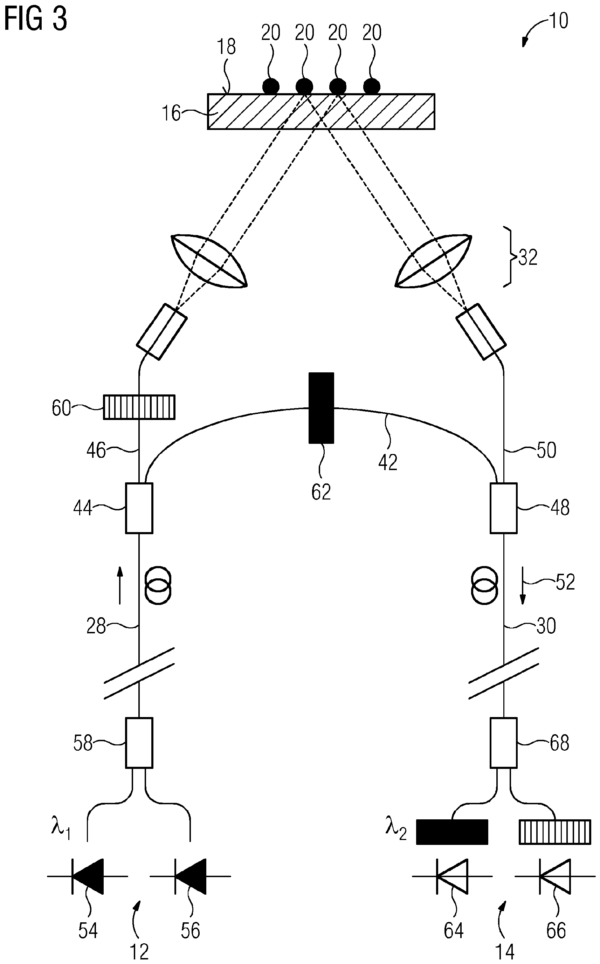

FIG 3 zeigt einen schematischen Aufbau eines zweiten Ausführungsbeispiels der Vorrichtung 10, wobei das Ausführungsbeispiel einen dritten Lichtleiter 42 aufweist. Der dritte Lichtleiter 42 ist als Abzweigelement ausgebildet, mittels welchem ein Teil des von der Lichtquelle 12 bereitgestellten Lichts unter Umgehung des Mediums 16 zu dem Detektor 14 geführt werden kann. Dazu ist in dem ersten Lichtleiter 26 ein Aufteilungselement 44 angeordnet, mittels welchem ein erster Teil des von der Lichtquelle 12 bereitgestellten Lichts durch den ersten Lichtleiter 26 durchführbar beziehungsweise in einen Teilbereich 46 des ersten Lichtleiter 26 einkoppelbar ist und ein zweiter Teil des von der Lichtquelle 12 bereitgestellten Lichts in den dritten Lichtleiter 42 einkoppelbar ist. Ferner ist in dem zweiten Lichtleiter 30 ein Kopplungselement 48 angeordnet, welches Licht aus einem ersten Teilbereich 50 des zweiten Lichtleiter 30 und Licht aus dem dritten Lichtleiter 42 in einen zweiten Teilbereich 52 des zweiten Lichtleiter 30 zusammenführt.

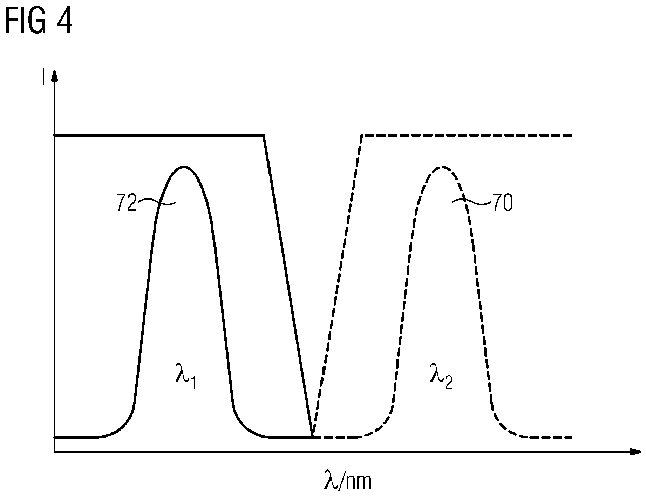

Mittels des Aufteilungselements 44, des dritten Lichtleiter 42 und des Kopplungselement 48 ist ein Teil des von der Lichtquelle 12 bereitgestellten Lichts unter Umgehung des Mediums 16 dem Detektor 14 zuführbar. Das dem Detektor 14 auf diesem Weg zugeführten Licht dient als Referenzlicht, welches dazu verwendet werden kann, eine Zuverlässigkeit einer Messung, wie sie beispielsweise in FIG 4 gezeigt wird, zu garantieren. Dazu sollte die Lichtquelle 12, wie oben bereits erwähnt, zumindest Licht zweier unterschiedlicher Wellenlängen beziehungsweise Wellenlängenbereiche aussenden können. Dies kann beispielsweise durch die beiden Teilquellen 54 und 56 geschehen, wobei die Lichtquelle 12 zusätzlich ein Kopplungselement 58 aufweisen kann, um das Licht unterschiedlicher Wellenlänge der beiden Teilquellen 54 und 56 in den Lichtleiter 26 einzukoppeln. Somit trägt das Licht der Lichtquelle 12 wenigstens zwei unterschiedliche Wellenlängen, wobei jeweils ein Filter in dem Teilbereich 46 des ersten Lichtleiters 26 und in dem dritten Lichtleiter 42 angeordnet ist. Dabei ist der Filter in dem Teilbereich 46 beispielsweise als Hochpassfilter 60 ausgebildet, während der Filter im Lichtleiter 42 als Tiefpassfilter 62 ausgebildet ist. Der Hochpassfilter 60 und der Tiefpassfilter 62 Teilen das Licht spektral auf.

Der Hochpassfilters 60 ist so ausgebildet, dass er nur den Teil des Lichts der Lichtquelle mit der kleineren Wellenlänge, das heißt den Teil des Lichts mit höherer Frequenz, durch sich hindurch lässt, wodurch erreicht wird, dass eben nur dieses Licht das Medium 16 erreicht. Mit anderen Worten wird nur der Teil des Lichts, welcher die kürzere Wellenlänge aufweist, von den abgelagerten Partikeln 20 reflektiert. Mittels des Tiefpassfilters 62 kann nur die Komponente beziehungsweise der Teil des Lichts, welcher die längere Wellenlänge und somit eine kleinere Frequenz aufweist den dritten Lichtleiter 42 passieren. Im Detektor 14 wird das Licht mittels eines Separationselements 68 in seine beiden Wellenlängenteile separiert und jeder dieser Teile auf einen jeweiligen diskreten Detektor 64 beziehungsweise 66 gelenkt.

Durch diesen Aufbau der Vorrichtung 10 ist es möglich beispielsweise eine zusätzliche Dämpfung in beispielsweise dem Lichtleiter 26, welcher insbesondere durch eine optische Faser ausgebildet ist und als Zuleitung zum Medium 16 aufzuspüren. Ferner können damit generell Faserbrüche der durch optische Fasern ausgebildeten Lichtleiter 26, 30 und/oder 42 entdeckt werden.

FIG 4 zeigt ein exemplarisches Messdiagramm einer Messung, welche mittels der Vorrichtung gemäß FIG 3 durchgeführt wurde. Dabei ist die horizontale Achse des Diagramms die Wellenlänge des Lichts, beispielsweise aufgetragen in Nanometern. Die vertikale Achse stellt die Intensität des Lichts in einer beliebigen Einheiten dar. Das gezeigte Diagramm ergibt sich durch beispielsweise die mittels des Hochpassfilters 60 und des Tiefpassfilters 62 unterschiedlich spektral selektierten Teile des Lichts der Lichtquelle 12 auf der zumindest teilweise durch den Lichtleiter 26 und das Medium 16 gebildeten Messstrecke im Vergleich zu der zumindest teilweise durch den Lichtleiter 42 gebildeten Referenzstrecke.

Das von der Ablagerungsoberfläche 18 zurückgestreute Licht, wie durch den Lichtstrahl 24 angedeutet, wird mittels des strahlformenden Elements 32, welches als Linse und/oder Kollimator ausgebildet ist, aufgefangen und über das Kopplungselement 48 wieder mit dem Referenzlicht auf den eine Rückleitung zum Detektor 14 ausbildenden Teilbereich 52 des zweiten Lichtleiters 30 zusammengeführt.

Für eine Auswertung, beispielsweise in der Auswerteeinheit, müssen die beiden Lichtteile, beispielsweise im Detektor 14 wieder spektral getrennt und separat ausgewertet werden. Das Referenzlicht, welches ein Referenzsignal bildet kann für eine Normierung des Messsignals, welches durch das an den Partikeln 20 reflektierte Licht gebildet wird, verwendet werden. Dadurch wird die Messung unabhängig von einer Dämpfung auswertbar, wobei die Dämpfung auf einer durch den Lichtleiter 26 gebildeten sogenannten Zuleitung beziehungsweise auf der durch den Lichtleiter 30 gebildeten sogenannten Ableitung auftreten kann. Damit sich Reibstaub beziehungsweise Partikel 20 auf der Ablagerungsoberfläche 18, der sogenannten Staubdetektorfläche, niederschlagen können, sollte diese innerhalb der zu überwachenden Maschine frei zugänglich sein.

In dem Diagramm der FIG 4 sind zwei Peaks 70 und 72 auszumachen, wobei der Peak 70 durch das Referenzlicht und der Peak 72 durch das an den Partikeln 20 reflektierte Licht gebildet wird. Die Position des Hochpassfilters 60 und des Tiefpassfilter 62 kann in der Vorrichtung 10 beispielsweise vertauscht sein. Je nachdem in welchem Lichtleiter 26 beziehungsweise 42 sich der Hochpassfilter 60 beziehungsweise der Tiefpassfilter 62 befindet, können die Peaks 70 beziehungsweise 72 ihre Position tauschen. Dabei entspricht ein Integral des jeweiligen Peaks der Intensität des jeweiligen Lichts. Für den Fall des Peaks 72 bedeutet das, je größer dessen Fläche ist, desto mehr Partikel 20 befinden sich auf der Ablagerungsoberfläche 18 und desto größer wird das Risiko eines Maschinenschadens.

## Patentansprüche

1. Vorrichtung (10) zur Detektion von Partikeln (20), mit wenigstens einer Lichtquelle (12), und mit wenigstens einem Detektor (14) zum Erfassen von Licht,
**gekennzeichnet durch**
wenigstens ein von von der Lichtquelle (12) bereitgestelltem Licht durchleuchtbares Medium (16), welches eine Ablagerungsoberfläche (18) für die Partikel (20) aufweist, wobei der Detektor (14) dazu ausgebildet ist, von den auf der Ablagerungsoberfläche (18) abgelagerten Partikeln (20) reflektiertes und das Medium (16) durchdringendes Licht zu erfassen.

2. Vorrichtung (10) nach Anspruch 1,
**gekennzeichnet durch**
wenigstens ein Abzweigelement, mittels welchem ein Teil des von der Lichtquelle (12) bereitgestellten Lichts unter Umgehung des Mediums (16) zu dem Detektor (14) führbar ist.

3. Vorrichtung (10) nach Anspruch 1 oder 2,
**gekennzeichnet durch**
- einen ersten Lichtleiter (16), mittels welchem das von der Lichtquelle (12) bereitgestellte Licht zum Beleuchten des Mediums (16) in dieses einkoppelbar ist; und
- einen zweiten Lichtleiter (30), mittels welchem das reflektierte Licht aus dem Medium (16) zu dem Detektor (14) zu führen ist.

4. Vorrichtung (10) nach den Ansprüchen 2 und 3, **dadurch gekennzeichnet, dass** das Abzweigelement durch einen dritten Lichtleiter (42) gebildet ist, mittels welchem zumindest der Teil des von der Lichtquelle bereitgestellten und den ersten Lichtleiter (26) durchlaufenden Lichts abzweigbar und zu dem Detektor (14) führbar ist.

5. Vorrichtung (10) nach Anspruch 4, **dadurch gekennzeichnet, dass** wenigstens ein Aufteilungselement (44) vorgesehen ist, mittels welchem ein erster Teil des von der Lichtquelle (12) bereitgestellten Lichts in den ersten Lichtleiter (26) und ein zweiter Teil des von der Lichtquelle (12) bereitgestellten Lichts in den dritten Lichtleiter (42) einkoppelbar ist.

6. Vorrichtung (10) nach Anspruch 4 oder 5, **dadurch gekennzeichnet, dass** wenigstens ein Kopplungselement (58) vorgesehen ist, mittels welchem Licht aus dem zweiten Lichtleiter (30) und Licht aus dem dritten Lichtleiter (42) zusammenführbar ist.

7. Vorrichtung (10) nach einem der Ansprüche 2 bis 6, **dadurch gekennzeichnet, dass** die Lichtleiter derart angeordnet sind, dass aus dem ersten Lichtleiter (26) austretendes Licht einen ersten Strahlengang und in den zweiten Lichtleiter (30) einfallendes Licht einen zweiten Strahlengang aufweist, welcher den ersten Strahlengang kreuzt.

8. Vorrichtung (10) nach einem der Ansprüche 2 bis 7, **dadurch gekennzeichnet, dass** der erste Lichtleiter (26) wenigstens ein strahlformendes Element (28) aufweist, über welches das Licht zum Beleuchten der Ablagerungsoberfläche (18) in das Medium (16) einkoppelbar ist.

9. Vorrichtung (10) nach einem der Ansprüche 2 bis 8, **dadurch gekennzeichnet, dass** der zweite Lichtleiter (30) wenigstens ein strahlformendes Element (32) aufweist, über welches das reflektierte Licht aus dem Medium (16) in den zweiten Lichtleiter (30) einkoppelbar ist.

10. Vorrichtung (10) nach einem der vorhergehenden Ansprüche, **dadurch gekennzeichnet, dass** wenigstens eine Strahlenfalle (38, 40) hinter dem Medium (16) und der Ablagerungsoberfläche (18) für zumindest einen Teil des das Medium (16) durchdringenden Lichts vorgesehen ist.

11. Vorrichtung (10) nach einem der vorhergehenden Ansprüche, **dadurch gekennzeichnet, dass** der Detektor (14) dazu ausgebildet ist, wenigstens ein, insbesondere elektrisches, Signal bereitzustellen, welches das erfasste reflektierte Licht charakterisiert, das die auf der Ablagerungsoberfläche (18) abgelagerten Partikel, welche das Licht zum Beleuchten des Mediums (16) zurückreflektieren, charakterisiert.

12. Verfahren zur Detektion von Partikeln (20), bei welchem die Partikel (20) mittels wenigstens einer Lichtquelle (12), und mittels wenigstens eines Detektors (14) zum Erfassen von Licht detektiert werden, **dadurch gekennzeichnet, dass** wenigstens ein eine Ablagerungsoberfläche (18) für die Partikel (20) aufweisendes Medium (16) von von der Lichtquelle (12) bereitgestelltem Licht durchleuchtet wird, wobei mittels des Detektors (14) Licht, welches von den auf der Ablagerungsoberfläche (18) abgelagerten Partikeln (20) reflektiert wird und das Medium (16) durchdringt, erfasst wird.
